# EUROPEAN PATENT APPLICATION

(11) **EP 4 488 915 A1**
(43) Date of publication of application: **08.01.2025**
(21) Application number: 22930722.8
(22) Date of filing: 07.03.2022
(51) Int. Cl.: G06Q 30/02, G06Q 30/0207, G06Q 30/08

(54) **MARKETING METHOD AND PROGRAM**

(71) Applicant: Life Labo Co., Ltd., Tokyo 101-0047 (JP)
(72) Inventor: AKIKUSA Takashi, Tokyo 101-0047 (JP)
(74) Representative: Gille Hrabal Partnerschaftsgesellschaft mbB Patentanwälte
(86) International application number: PCT/JP2022/009708
(87) International publication number: WO 2023/170736

(57) **Abstract**

[Problem] To achieve effective marketing through point back that can effectively acquire high-quality users essential for the company, in marketing methods and programs using points.

[Solution] The purchase target registration module 103 conducts user registration for purchase-interested user 113 who has made purchase transactions and grants them a cap on collaboration points, while storing information about the transaction objects (purchased products, etc.) for which the registered user has conducted purchase transactions. When a registered user conducts a new sale transaction for the transaction object and the sale price at the time of the new sale transaction does not reach the purchase price at which the registered user bought the transaction object, the collaboration points granting module 105 grants collaboration points to the registered user equivalent to the difference between the purchase price and the sale price, within the limit of the granted collaboration points cap, thereby compensating for the difference.

## Description

### Technical Field

This invention relates to a marketing method using points and a program.

### Background Art

In general trading markets, such as online/offline goods markets, flea markets, or auction markets, it is a common practice to offer rewards points to users who have conducted transactions in order to attract more users (e.g., Patent Literature 1).

### Citation List

### Patent Literature

[Patent Literature 1] JP2002-092740A

### Summary of the Invention

### Problems to be Solved by the Invention

However, the general practice of providing rewards points for transactions means that points are distributed to a broad, unspecified number of users. Consequently, the burden of providing points increases, making it difficult for startups and other companies with limited financial resources to implement, while not all users who receive points are necessarily the high-quality users companies need, not all points rewards being effective, leading to points being an ineffective marketing tool.

Therefore, the objective of this invention is to achieve effective marketing through a point rewards system that efficiently attracts high-quality users needed by the company.

### Means for Solving the Problems

With a marketing method as an example of embodiments, regardless of whether the item is acquired from one's own company, another company, or another store, persons or entities who have obtained items through purchase transactions are made to register as users and are granted a cap on collaboration points, while registered users store information about the product and purchase price, among other details, of the transaction object they have bought; when the registered user conducts a new sale transaction for the specific transaction object and the sale price at the time of the new sale transaction does not reach the purchase price at which the registered user bought the transaction object, collaboration points equivalent to the difference between the purchase price and the sale price are granted to the registered user, within the limits of the granted collaboration points cap.

### Effect of the Invention

According to the present invention, users can gain the opportunity to register and sell items they acquired through purchase transactions under the condition that the difference between the purchase and sale price falls within the collaboration points cap, thereby enabling a mechanism where, as long as the conditions are met, collaboration points equivalent to the difference can be continuously awarded, potentially allowing for the acquisition of products virtually for free. Assuming implementing an embodiment of this invention in a simultaneous auction scenario, introducing an element of chance as to whether the difference will fall within the points cap can evoke a sense of excitement, and rather than merely provide an economic incentive, it will also strongly engage user interest, thereby enabling the realization of a marketing strategy that can effectively acquire the high-quality users necessary for the company.

### Brief Description of Drawings

[Fig. 1] Block diagram of a trades management system with a marketing function, an embodiment.
[Fig. 2] An example of the hardware configuration of the embodiment.
[Fig. 3] An example of a screen of the embodiment.
[Fig. 4] Flowchart showing an example of the purchase target registration process in the embodiment.
[Fig. 5] Flowchart showing an example of the collaboration points granting process in the embodiment.

### Modes for Carrying Out the Invention

Hereinafter, a description will be given of a preferred mode for carrying out the present invention with reference to the drawings.

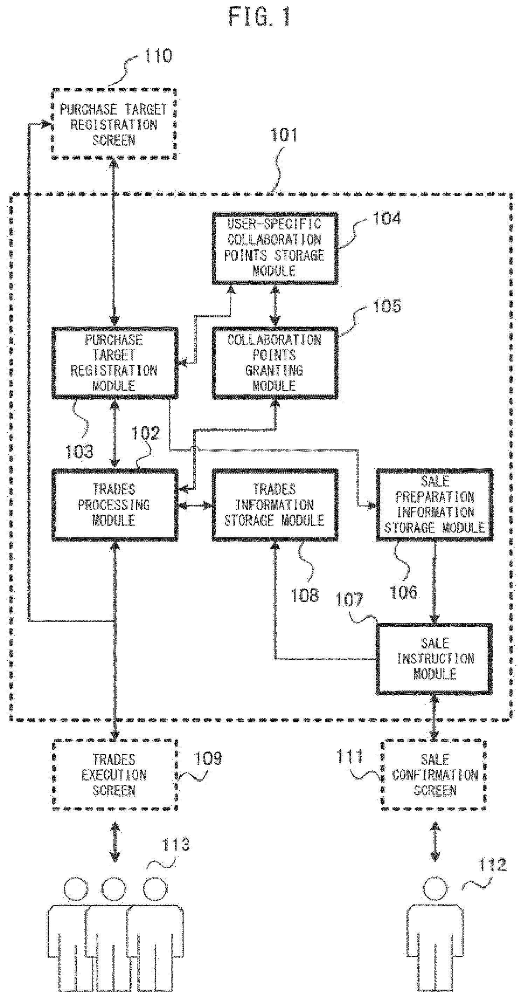

Fig. 1 is a functional block diagram of a trades management system 101 equipped with marketing functions, an embodiment of the invention. The trades management system 101 referred to here is a system that manages an online trading marketplace (marketplace) where users can purchase (purchase transactions) products or services, or sell (sale transactions) products or services they own, such as at flea markets or auctions.

The trades management system 101 includes a trades processing module 102, purchase target registration module 103, user-specific collaboration points granting module 104, collaboration points granting module 105, sale preparation information storage module 106, sale instruction module 107, and trades information storage module 108.

The trades management system 101 is equipped with basic functions for managing a marketplace, as described in the following.

First, when a user (hereinafter, this user is referred to as "selling-interested user 112") wants to sell a product or service they own (hereinafter referred to as "sale target"), selling-interested user 112 accesses the marketplace's website for the trades management system 101 via the internet or other network using a device they operate, such as a smartphone or personal computer (hereinafter referred to as "terminal device"), and sends a display request for the sale confirmation screen 111. Upon receiving this request, the sale instruction module 107 displays the sale confirmation screen 111 on the display of the terminal device operated by selling-interested user 112. Selling-interested user 112 uses this sale confirmation screen 111 to enter information about the sale target.

For example, when the trades management system 101 provides a marketplace for a flea market, the information about the sale target includes the details of the product or service being sold and the sale price, for example.

For example, when the trades management system 101 provides a marketplace for an auction, the information about the sale target includes the details of the product or service being sold, the starting sale price, a buyout price, and the sale period, among others, for example.

Additionally, the information about the sale target includes personal information (such as name, address, telephone number, email address, etc.) about selling-interested user 112, who conducted the sale.

The sale instruction module 107 registers the information about the sale target entered by selling-interested user 112 through the sale confirmation screen 111 into the trading information storage module 108.

The trades execution module 102 generates a trades execution screen 109 for conducting the sale and purchase of the sale target, based on information about the sale target registered in the trades information storage module 108. An unspecified number of users interested in purchasing can access the marketplace's website of the trades management system 101 via the internet or other networks from their respective terminal devices, opening the trades execution screen 109 of the desired sale target while searching for products or services.

If any user among the unspecified number of users wishes to purchase a desired sale target (hereinafter referred to as "purchase-interested user 113"), then that purchase-interested user 113 executes the purchase procedure for that sale target on the purchase page within the trades execution screen 109. Specifically, purchase-interested user 113 enters their user information (such as name, telephone number, and delivery address) and payment information (for example, credit card information) on the purchase page. Furthermore, it is possible to set these details to be automatically populated on the purchase page within the trade execution screen 109 when purchase-interested user 113 interested in purchasing has previously registered in the marketplace and logs in, thereby automatically referencing those details.

The trades execution module 102 retrieves user information related to said purchase-interested user 113 from the purchase page within the trades execution screen 109 and registers the user information in association with the information about the sale target within the trades information storage module 108.

Moreover, based on the payment information entered by said purchase-interested user 113 on the purchase page within the trades execution screen 109, the trades execution module 102 executes the payment corresponding to the sale amount of the sale target.

Subsequently, for example, the trades execution module 102 notifies selling-interested user 112's email address, stored in the trades information storage module 108 and related to the sale target, that the sale target has been purchased and payment has been completed, along with the delivery information for purchase-interested user 113, and instructs to ship the sale target to purchase-interested user 113.

Following the notification, selling-interested user 112 ships the sale target to purchase-interested user 113 and notifies on the transaction page within the trades execution screen 109 that the shipping of the sale target has been completed.

After receiving delivery of the sale target, purchase-interested user 113 notifies on the transaction page within the trades execution screen 109 that they have received the sale target.

After receiving the receipt notification, the trades execution module 102 carries out payment procedures, such as transferring the settlement amount corresponding to the sale target to the bank account associated with selling-interested user 112, linked to the information about the sale target, at predetermined timing.

The trades management system 101 in the embodiment shown in Fig. 1, in addition to the basic functions described above, includes a function to implement marketing through point rewards to registered users. To realize this point reward function (marketing function), the trades execution module 102 in the trades management system 101 shown in Fig. 1 is equipped with the capability to control point rewards at the time of conducting trade transactions. Specifically, in Fig. 1, the trades management system 101 further includes a purchase target registration module 103, a user-specific loyalty points storage module 104, a loyalty points granting module 105, and a sale preparation information storage module 106.

In Fig. 1, the purchase target registration module 103 registers purchase-interested user 113 who has bought a product or service (hereinafter referred to as "purchase target") in a trade transaction conducted by the trades execution module 102, and grants, for example, 10000 points as the collaboration points cap. Moreover, the purchase target registration module 103 registers/stores information about the purchase target bought by the registered user as sale preparation information for a new sale in the sale preparation information storage module 106.

Specifically, the purchase target registration module 103 displays the purchase target registration screen 110, transitioning from the trades execution screen 109 when a purchase-interested user 113 purchases a purchase target, on the display of the terminal device operated by purchase-interested user 113.

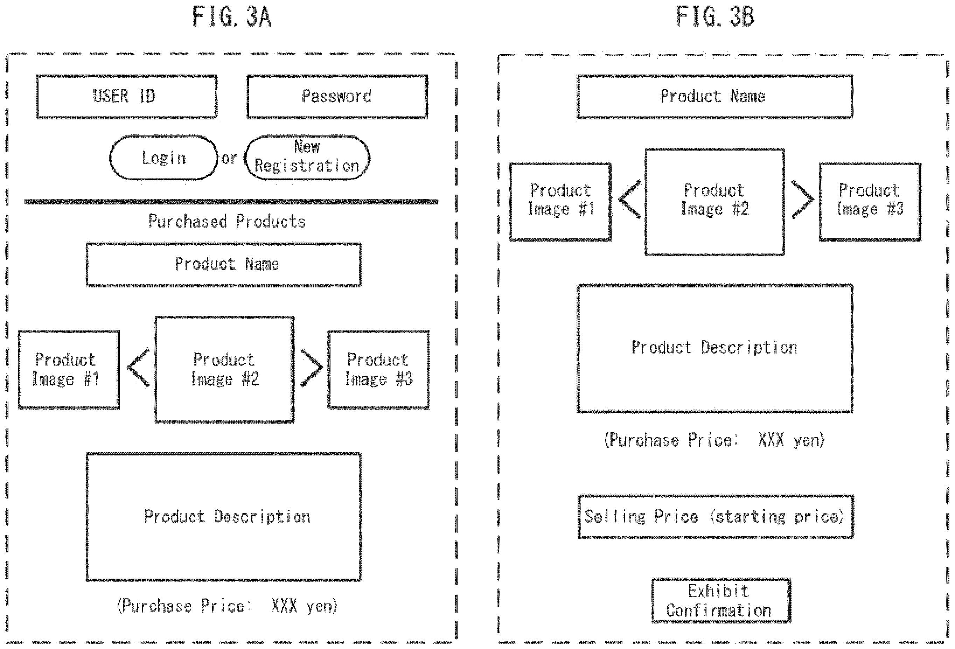

Fig. 3(a) is a diagram showing an example of the purchase target registration screen 110 when the purchase target is a product. If purchase-interested user 113 is a new user of the trades management system 101, for example, purchase-interested user 113 enters a desired user ID and password on the purchase target registration screen 110 by tapping and the like, and performs user registration by tapping the "New Registration" button. At this time, although not illustrated, the screen could transition to a user registration screen, where detailed information about the user can be entered.

If purchase-interested user 113 is an existing registered user of the trades management system 101, they enter their registered user ID and password by tapping on the purchase target registration screen 110, and log in by tapping the "Login" button.

When said purchase-interested user 113 is a new user, at the moment the "New Registration" button is tapped, the purchase target registration module 103 in Fig. 1 receives user information about the registered user from the purchase target registration screen 110 and stores that user information as one record in the database of the user-specific loyalty points storage module 104.

At this time, the purchase target registration module 103 stores, for example, 10000 points as the collaboration points cap in the said record of the user-specific loyalty points storage module 104.

When said purchase-interested user 113, who is an existing registered user, taps the "Login" button on the purchase target registration screen 110 exemplified in Fig. 3(a), a record related to that purchase-interested user 113 already exists in the user-specific loyalty points storage module 104, and the collaboration points cap has been granted. The purchase target registration module 103 matches the pair of user ID and password entered from the purchase target registration screen 110 against each pair of user ID and password stored in the user-specific loyalty points storage module 104. If the match is successful, the purchase target registration module 103 skips the registration process to the user-specific loyalty points storage module 104 and proceeds to the processes described below. If the match fails, it executes a process such as requesting the user ID and password again.

When displaying the purchase target registration screen 110 on the terminal of purchase-interested user 113, the purchase target registration module 103 also retrieves information about the purchase target (purchased product) that said purchase-interested user 113 bought, along with the purchase price, from the trades execution module 102 and displays this information in the screen area below "Purchased Products" exemplified in Fig. 3(a).

Then, for example, when a new user registration is performed by tapping the "New Registration" button or login is performed by tapping the "Login" button on the purchase target registration screen 110 exemplified in Fig. 3(a), the purchase target registration module 103 registers/stores the aforementioned information about the purchase target (purchased product) as sale preparation information for a new sale in the sale preparation information storage module 106 shown in Fig. 1. The sale preparation information includes the product name, product description, and product images of the purchase target (purchased product). Additionally, the sale preparation information includes the purchase price information of the purchase target (purchased product). Furthermore, as part of this sale preparation information, the user ID and password entered by purchase-interested user 113 (refer to Fig. 3(a)) is also registered.

Subsequently, let's assume purchase-interested user 113 wishes to sell the purchase target they bought on the marketplace of the trades management system 101. In this case, purchase-interested user 113 would enter the sale procedure for the said purchase target as selling-interested user 112, as shown in Fig. 1. In the following description, unless specifically mentioned, "selling-interested user 112" refers to a user who originally purchased a product or service, et cetera, as purchase-interested user 113 on the marketplace of the trades management system 101 and now wishes to sell that purchase target as a new sale target.

In this case, the new selling-interested user 112, formerly known as purchase-interested user 113, accesses the sale confirmation screen 111 in Fig. 1 from their terminal device, as a basic function of the trades management system 101 described earlier. At this time, selling-interested user 112 logs in using the user ID and password pair initially entered as purchase-interested user 113 on the purchase target registration screen 110 exemplified in Fig. 3(a). As a result, the sale instruction module 107 reads the sale preparation information related to the original purchase target (purchased product) registered with the same user ID and password pair entered from the sale preparation information storage module 106 and displays it on the sale confirmation screen 111. If there are multiple pieces of sale preparation information related to multiple purchase targets stored for selling-interested user 112 in the sale preparation information storage module 106, the sale instruction module 107 may read and display a list of those pieces of sale preparation information sharing the same user ID and password pair from the sale preparation information storage module 106, allowing selling-interested user 112 to select and use one of them.

Fig. 3(b) is a diagram showing an example of the sale confirmation screen 111 in the embodiment. In this screen example, the information about the products or services originally registered by the current selling-interested user 112, who was initially purchase-interested user 113, on the previously mentioned purchase target registration screen 110 is displayed as is, as exemplified in Fig. 3(a). In particular, in the example of the sale confirmation screen 111 in Fig. 3(b), the original purchase price, for example, is displayed around the center.

Furthermore, if the marketplace of the trades management system 101 is a flea market, an example of the sale confirmation screen 111 in Fig. 3(b) will display a box for specifying the selling price in a format that allows selling-interested user 112 to enter a value.

In the case of the marketplace of the trades management system 101 being an auction, an example of the sale confirmation screen 111 may display a box for specifying the starting price of the auction instead of the box for specifying the sale price.

Thus, the selling-interested user 112 can decide on the selling price (in the case of a flea market) or the starting price (in the case of an auction), while referring to the original purchase price.

After this, the operation in which selling-interested user 112 confirms the sale information stores this sale information in the trades information storage module 108 of Fig. 1 and generates the trades execution screen 109 in the trades processing module 102 to start the trade transaction is similar to that of the basic function of the aforementioned trades management system 101.

However, at this time, the sale information includes the original purchase price information of the sale target (sale item), which is stored in the trades information storage module 108, differing from the case of the aforementioned basic function.

After generating the trades execution screen 109, the trades processing module 102, similar to the case of the aforementioned basic function, makes the trades execution screen 109 available to an unspecified number of user groups.

When the aforementioned sale target is sold to any of the unspecified number of users in Fig. 1, the trades processing module 102 in Fig. 1 compares the original purchase price included in the sale information stored in the trades information storage module 108 with the current sale price. As a result, if the sale price of the sale target does not reach the original purchase price at which selling-interested user 112 originally purchased the sale target, the trades processing module 102 activates the collaboration points granting module 105.

For instance, if the marketplace of the trades management system 101 is a flea market, a new selling price not reaching the original purchase price could occur, for example, through price negotiation between selling-interested user 112 and a new purchase-interested user 113.

Additionally, if the marketplace of the trades management system 101 is an auction, a new purchase price not reaching the original purchase price could happen when the sale target is newly auctioned off and the auction price (i.e., selling price) does not reach the original purchase price.

In the aforementioned cases, the collaboration points granting module 105, activated when the new price fails to meet the original, accesses the user-specific collaboration points storage module 104 to retrieve the corresponding collaboration points for selling-interested user 112. Then, the collaboration points granting module 105 awards points to selling-interested user 112, within the cumulative limit of, for example, 10,000 points, which is the maximum points limit for the user, equivalent to the difference between the new and original prices.

Advertising the points back by the trades management system 101, as described in the above embodiment, to new purchase-interested users 113 who buy products or services through the trades management system 101 can encourage these users to become new selling-interested users 112 and continue using the marketplace of the trades management system 101.

In flea markets and auctions, there's an element of gamble for the selling-interested users (sellers) because they don't know the final selling price of their products or services until they are sold. Therefore, by offering a function to compensate for the difference between the new purchase price and the original price and continuously bearing this difference, it becomes possible to keep users engaged with the marketplace of the trades management system 101.

For selling-interested user 112, this also creates a decluttering effect, where they can sell products or services with the assurance that any price difference risk will be compensated.

Thus, in this embodiment, the trades management system 101 can effectively acquire users who genuinely want to use its marketplace, and significant marketing effects can be expected.

In the trades management system 101 as described in the above embodiment, the collaboration points granting module 105 can grant collaboration points equivalent to the difference within a set grant period, for example, within one month. If the granting of collaboration points to registered users within the set period meets certain conditions, the registered users can be re-authorized to receive collaboration points in the next set grant period. As for these conditions, for example, it can be set that the cumulative value of collaboration points granted to registered users within the set period should not exceed the collaboration point limit, such as 10,000 points. If these conditions are met for the registered users, it is permissible to re-grant the collaboration points limit, for example, 10,000 points, to the registered users at the start of the next set grant period.

In the trades management system 101 according to the aforementioned embodiment, when registered users (purchase-interested user 113) register a purchase target on the purchase target registration screen 110 in Fig. 1, they can be allowed to select the purchase targets for which collaboration points will be granted.

In the trades management system 101 as described in the above embodiment, collaboration points may be electronic data that can be used in the marketplace of the trades management system 101. Furthermore, these collaboration points could also be a digital currency that is tradable on the internet or similar networks.

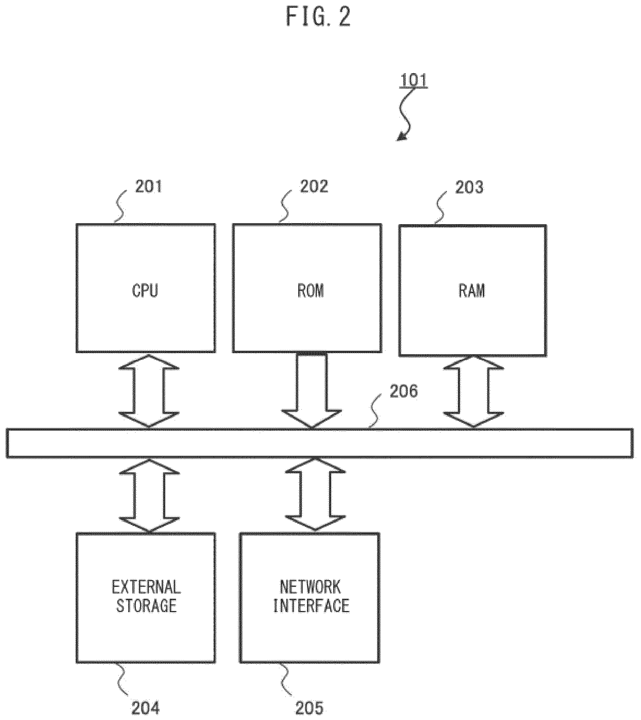

Fig. 2 is a diagram showing a hardware configuration example of the trades management system 101 according to the embodiment in Fig. 1. In Fig. 2, the trades management system 101 may have a configuration typical of a general server computer system, comprising a CPU (Central Processing Unit) 201, ROM (Read-Only Memory) 202, RAM (Random Access Memory) 203, an external storage device 204, and a network interface 205, all interconnected by a system bus 206.

The external storage device 204 functions as the user-specific collaboration points storage module 104, sale preparation information storage module 106, and trades information storage module 108 in Fig. 1.

The trades processing module 102, purchase target registration module 103, collaboration points granting module 105, and sale instruction module 107 in Fig. 1 are functional parts where the CPU 201 executes control programs loaded from ROM 202 or the external storage device 204 into RAM 203.

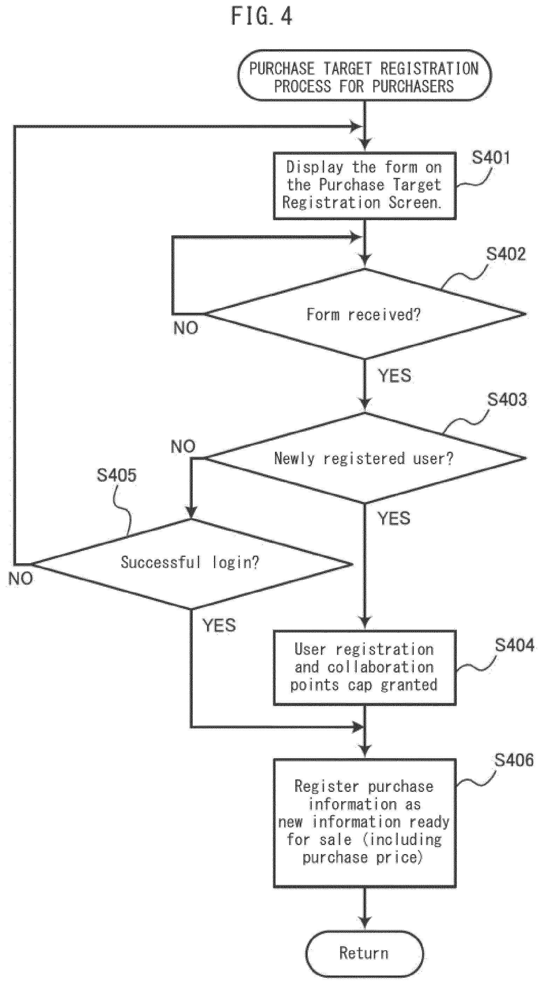

Fig. 4 is a flowchart showing an example of the purchase target registration process for buyers in the trades management system 101 according to the embodiment, which is executed under the hardware configuration example of Fig. 2. This process involves the CPU 201 in Fig. 2 loading and executing control programs stored in ROM 202 or the external storage device 204 into RAM 203, realizing the function of the purchase target registration module 103 in Fig. 1. The purchase target registration process exemplified in the flowchart of Fig. 4 is initiated when, after a purchase target is bought in the marketplace, the trades processing module 102 in Fig. 1, at an appropriate stage of screen transition for the purchase transaction, activates a link (not shown) for purchase target registration, which is tapped or similarly activated by purchase-interested user 113.

In the flowchart of Fig. 4, the CPU 201 first displays the form of the purchase target registration screen 110 in Fig. 1, as exemplified in Fig. 3(a), on the display of the terminal device of purchase-interested user 113 (Step S401).

Next, CPU 201 waits until the form of the purchase target registration screen 110 is received, which happens when purchase-interested user 113 taps the "New Registration" or "Login" button as exemplified in Fig. 3(a) (repeating NO in Step S402 decision).

When the form of the purchase target registration screen 110 is received and the decision in Step S402 becomes YES, CPU 201 determines whether purchase-interested user 113 is a new registrant, that is, which button-either "New Registration" or "Login" as shown in the screen example of Fig. 3(a)-was tapped or similarly activated (Step S403).

If it is determined that purchase-interested user 113 is a new registrant because the "New Registration" button in the screen example of Fig. 3(a) was tapped (YES in Step S403), then CPU 201, as part of the operation of the purchase target registration module 103 in Fig. 1, receives user information related to the registrant as form data of the purchase target registration screen 110 due to the form reception in Step S402, registers and stores this user information in one record of the database in the user-specific collaboration points storage module 104. Furthermore, CPU 201 stores, for instance, 10,000 points as the collaboration points limit in the aforementioned record of the user-specific collaboration points storage module 104 (Step S404 above).

Alternatively, if purchase-interested user 113 is determined to be an existing registered user because the "Login" button in the screen example of Fig. 3(a) was tapped (NO in Step S403 decision), then CPU 201, as part of the processing of the purchase target registration module 103 in Fig. 1, compares the user ID and password data pair entered as form data of the purchase target registration screen 110 received in Step S402 with each user ID and password stored in the user-specific collaboration points storage module 104 (Step S405).

If CPU 201 succeeds in this matching process (YES in Step S405 decision), it skips the registration process of Step S404 and proceeds to the process in Step S406. If the matching process fails (NO in Step S405 decision), for example, it returns to the process of Step S401 and asks purchase-interested user 113 to re-enter the user ID and password. Although not specifically illustrated, if this matching process fails several times, a message may be displayed to end the purchase target registration process.

After the process of Step S404, or if the decision in Step S405 becomes YES, CPU 201, as part of the processing of the purchase target registration module 103, registers/stores the information about the purchase target exemplified in Fig. 3(a)-acquired from the purchase target registration screen 110 due to the form reception in Step S402 or directly from the function of the trades processing module 102 in Fig. 1-as new auction sale preparation information in the sale preparation information storage module 106 of Fig. 1. As previously mentioned, CPU 201 adds the purchase price information and the data pair of user ID and password entered by purchase-interested user 113 to the sale preparation information (Step S406 above).

Afterward, CPU 201 returns to the main control processing, which is not specifically illustrated, and ends the purchase target registration process exemplified in the flowchart of Fig. 4.

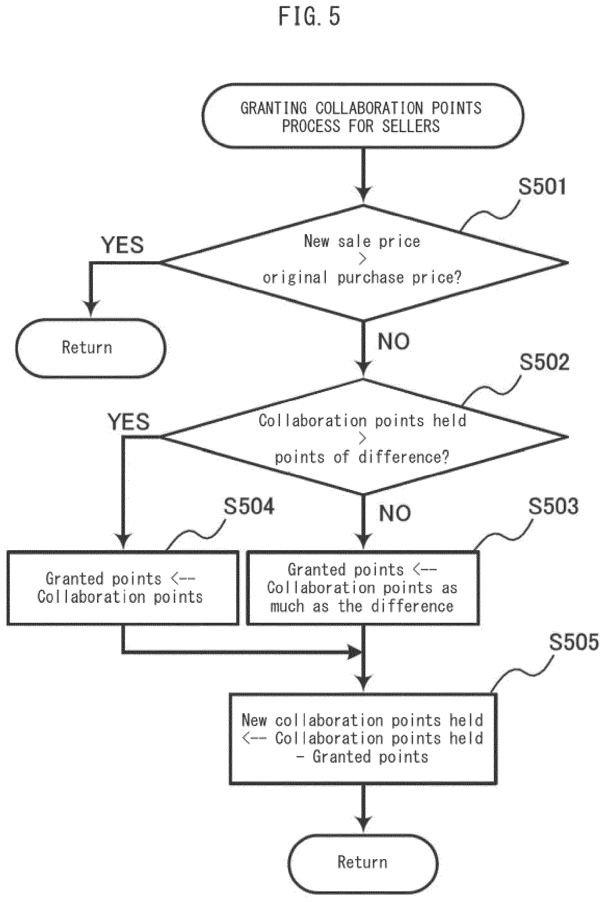

Fig. 5 is a flowchart showing an example of the collaboration points granting process for sellers in the trades management system 101 according to the embodiment, executed under the hardware configuration example of Fig. 2. This process involves CPU 201 in Fig. 2 loading and executing a control program stored in ROM 202 or the external storage device 204 into RAM 203, realizing the function of the collaboration points granting module 105 in Fig. 1. The collaboration points granting process exemplified in the flowchart of Fig. 5 is automatically initiated when the sale target is newly sold and the series of processes by the trades processing module 102 in Fig. 1 are completed, provided that the information about the sale target stored in the trades information storage module 108 in Fig. 1 includes the original purchase price information. If the original purchase price information is not included, the collaboration points granting process is not initiated, and the process of the trades processing module 102 in Fig. 1 ends as it is.

In the flowchart of Fig. 5, CPU 201 first compares and determines the original purchase price included in the information about the sale target stored in the trades information storage module 108 of Fig. 1 with the new selling price (Step S501).

If the comparison and determination in Step S501 result in the new selling price of the product exceeding the purchase price originally paid by selling-interested user 112 when they purchased the sale target (YES in Step S501 decision), then CPU 201 does not grant collaboration points and ends the collaboration points granting process exemplified in the flowchart of Fig. 5, returning to the main process, which is not specifically illustrated.

If the comparison and determination in Step S501 result in the new selling price of the product not reaching the purchase price originally paid by selling-interested user 112 (NO in Step S501 decision), CPU 201 then determines whether the current collaboration points held in the user-specific collaboration points storage module 104 of Fig. 1 are more than the points corresponding to the difference calculated as a result of the comparison process in Step S501 (i.e., original purchase price - new selling price) (Step S502).

If the decision in Step S502 is NO, then CPU 201 grants the collaboration points corresponding to the difference calculated in Step S501 as granting points to selling-interested user 112 (Step S503). Specifically, for example, an amount equivalent to the above-mentioned granting points is added to the selling price and transferred to a bank account or similar that was previously registered by selling-interested user 112.

If the decision in Step S502 is YES, then CPU 201 grants all the current held collaboration points acquired in Step S502 as granting points to selling-interested user 112 (Step S504). Specifically, for example, an amount equivalent to the above-mentioned granting points is added to the selling price and transferred to a bank account or similar, previously registered by selling-interested user 112.

After the process of either Step S503 or S504, CPU 201 replaces and updates the held collaboration points for selling-interested user 112 in the user-specific collaboration points storage module 104 by subtracting the granting points calculated in Step S503 or S504 from the current held collaboration points acquired in Step S502 and registers this result as the new held collaboration points (Step S505).

Afterward, CPU 201 ends the collaboration points granting process exemplified in the flowchart of Fig. 5 and returns to the main process, which is not specifically illustrated.

### DESCRIPTION OF REFERENCE NUMERALS

101 Trades management system
102 Trades processing module
103 Purchase target registration module
104 User-specific collaboration points storage module
105 Collaboration points granting module
106 Sale preparation information storage module
107 Sale instruction module
108 Trades information storage module
109 Trades execution screen
110 Purchase target registration screen
111 Sale confirmation screen
112 Selling-interested user
113 Purchase-interested user
201 CPU
202 ROM
203 RAM
204 External storage
205 Network interface
206 System bus

## Claims

1. A marketing method comprising: initiating user registration to a person or entity who has made a purchase transaction, granting a collaboration points cap thereto, storing information related to the transaction object of the purchase transaction conducted by the registered user who has completed the user registration, and
when the registered user conducts a new sale transaction for the said transaction object and the sale price in the new sale transaction does not reach the purchase price at which the registered user purchased the transaction object, granting to the registered user collaboration points equivalent to the difference between the purchase price and the sale price, within the range of the collaboration points cap granted to the registered user.

2. A marketing method according to Claim 1, wherein the granting of the collaboration points involves granting points equivalent to the difference within a specified grant period, and if the granting of collaboration points to the registered user within the specified grant period meets certain conditions, the right to grant collaboration points during the next set grant period is again given to the registered user.

3. A marketing method according to Claim 2, wherein the granting of the collaboration points is conditioned on the total amount of collaboration points granted to the registered user within the specified grant period not exceeding the collaboration points cap, and if this condition is met for the registered user, the collaboration points cap is granted again to the registered user at the start of the next set grant period.

4. A marketing method according to any one of Claims 1 to 3, wherein the registered user is allowed to select products to which the collaboration points are to be granted.

5. A marketing method according to any one of claims 1 to 4, wherein the collaboration points include digital currency.

6. A program for causing a computer to execute the process of: initiating user registration to a person or entity who has made a purchase transaction, granting a collaboration points cap thereto, storing information related to the transaction object of the purchase transaction conducted by the registered user who has completed the user registration, and
when the registered user conducts a new sale transaction for the said transaction object and the sale price in the new sale transaction does not reach the purchase price at which the registered user purchased the transaction object, granting to the registered user collaboration points equivalent to the difference between the purchase price and the sale price, within the range of the collaboration points cap granted to the registered user.
